# DEMANDE DE BREVET EUROPEEN

(11) **EP 0 949 030 A1**
(43) Date de publication de la demande: **13.10.1999**
(21) Numéro de dépôt: 99420082.2
(22) Date de dépôt: 01.04.1999
(51) Int. Cl.: B23B 31/11

(54) **Outil de coupe rotatif**

(30) Priorité: 06.04.1998 FR 9804643
(71) Demandeur: YVON BELIN S.A., F-01590 Lavancia Epercy (FR)
(72) Inventeur: Coral, Hilaire, Bouvent, 01100 Oyonnax (FR)
(74) Mandataire: Poncet, Jean-François

(57) **Abrégé**

L'outil de coupe (12) comporte une tige (13) engagée dans une partie tronconique (6) distale d'une cavité axiale d'un corps (1), avec un épaulement (15) venant porter contre une face annulaire radiale d'appui (5) du corps (1). La tige (13) comporte un tenon à tête (16) engagé dans une mortaise (18) d'une pièce de liaison (17) ayant une partie filetée (22) vissée dans un alésage taraudé (25) d'un tirant (23). Une bague (29) est adaptée à faible jeu autour de la partie distale (30) de la pièce de liaison (17). On assure ainsi une tenue efficace de la tête d'outil (12) interchangeable.

## Description

La présente invention concerne les outils de coupe rotatifs à tête interchangeable, permettant l'usinage de pièces par enlèvement de matière par fraisage, alésage ou autre usinage réalisable par un outil rotatif.

L'invention s'applique plus particulièrement aux outils de coupe rotatifs utilisables pour des vitesses de coupe élevées.

Les outils de coupe comportent généralement une tête de coupe, munie d'une ou plusieurs arêtes de coupe en matériau dur tel que le carbure de silicium, un cermet, le nitrure de bord cubique, les céramiques, le diamant polycristallin. La tête de coupe est solidaire d'un corps cylindrique et/ou tronconique destiné à assurer la liaison entre la tête et un porte-outil rotatif tel qu'une broche de machine-outil.

Pour couvrir une gamme étendue d'usinage, l'opérateur doit disposer d'un nombre relativement important d'outils de coupe complets, comportant un corps et une tête, ce qui représente un investissement important.

Pour tenter de supprimer ces inconvénients, on a proposé de réaliser des outils de coupe en deux parties déconnectables, de manière à pouvoir assembler sur un même corps une pluralité de têtes de coupe. Cette solution est décrite notamment dans les brevets EP 0 298 937 A, EP 0 776 719 A, DE 34 10 563 A et DE 37 11 412 A.

Dans les structures décrites dans ces documents, l'outil de coupe rotatif à tête interchangeable comprend un corps conformé extérieurement pour être tenu dans un porte-outil, un ensemble interchangeable composé d'une tête de coupe prolongée par une queue, et des moyens de liaison pour assurer l'assemblage entre le corps et la queue.

Dans le document DE 34 10 563 A, la queue d'outil est tenue en appui sur une face frontale de corps et engagée dans un alésage cylindrique du corps dans lequel elle est bloquée par l'expansion d'une portion élastique de sa paroi sollicitée radialement par un moyen interne de serrage à vis radiale. La liaison entre la queue et le corps manque de rigidité et de précision pour les applications d'usinage à vitesses élevées, et la structure est complexe.

Il en est de même de la solution décrite dans le document DE 37 11 412 A, dans laquelle la queue est tenue en appui sur une face frontale du corps et engagée dans un alésage cylindrique du corps dans lequel elle est tirée axialement par une douille filetée de liaison.

Avec la solution proposée dans le document EP 0 298 937 A, la liaison entre la queue et une pièce de liaison est dissymétrique, de type crochet à engagement latéral. On a constaté que cette solution ne permet pas de tenir les tolérances d'usinage recherchées dans les applications d'outils à vitesses élevées.

Avec la solution proposée dans le document EP 0 776 719 A, la liaison entre la queue et une pièce de liaison est symétrique, de type tenon-mortaise, et la queue tirée par la pièce de liaison vient en appui sur le corps à la fois par une face frontale et par un tronçon tronconique. La liaison est ainsi très rigide entre la queue et le corps, adpatée aux applications d'usinage à grande vitesse, et de bons résultats sont alors obtenus lorsque les pièces sont ajustées de manière très précise pour assurer leur assemblage les unes dans les autres de façon rigoureusement symétrique par rapport à l'axe longitudinal de l'outil.

Cependant, dans une production en série d'outils de coupe, il n'est pas économiquement réalisable d'assurer une tolérance très précise des formes de pièce destinées à s'assembler, et l'on a alors constaté des résultats d'usinage inacceptables à grande vitesse, l'outil n'étant pas capable de tenir les tolérances d'usinage recherchées.

Une analyse minutieuse de ces problèmes a montré que les défauts d'usinage résultent notamment d'un défaut d'alignement de l'outil sur l'axe de rotation du porte-outil, l'outil pouvant être très légèrement dévié obliquement par rapport à l'axe de rotation.

Ainsi, le problème proposé par la présente invention est de concevoir un nouveau type d'attache entre un corps et une queue d'outil qui assure à la fois un alignement correct de l'outil le long de l'axe de rotation et une grande rigidité de liaison.

Un autre objet de l'invention est de concevoir une telle structure de moyen d'attache pouvant être réalisée à moindre coût selon des tolérances usuelles, compatibles avec une production économique en série.

Pour atteindre ces objets ainsi que d'autres, un outil de coupe rotatif à tête interchangeable selon l'invention comprend :
- un corps conformé extérieurement pour être tenu dans un porte-outil et comportant une cavité axiale ouvrant sur un orifice distal bordé d'une face annulaire radiale d'appui, la cavité axiale comportant, à partir de l'orifice distal, une portion tronconique coaxiale allant en se rétrécissant vers l'intérieur et suivie d'une portion cylindrique coaxiale,
- un ensemble interchangeable composé d'une tête de coupe prolongée par une queue, avec un tronçon tronconique coaxial au moins partiellement complémentaire de la portion tronconique coaxiale du corps, et avec un décrochement annulaire radial correspondant à la face annulaire radiale du corps,
- une pièce de liaison comprenant des moyens permettant son asssemblage déconnectable sur ladite queue et des moyens de serrage axial pour fixer la pièce de liaison dans la portion cylindrique coaxiale de cavité axiale du corps avec déplacement axial pour assurer un appui axial de la queue à la fois contre la portion tronconique coaxiale et contre la face annulaire radiale du corps,
- les moyens de serrage axial comprenant un tirant engagé à rotation dans la cavité axiale du corps et bloqué en translation axiale vers l'extrémité distale du corps, avec une portion proximale accessible pour son entraînement en rotation, et avec une portion distale coopérant par vissage avec la pièce de liaison, pour solliciter en translation axiale la pièce de liaison et l'ensemble interchangeable lors d'une rotation axiale du tirant.

Ainsi, la liaison entre la queue d'outil et le corps comprend à la fois des faces frontales respectives d'appui, et des faces tronconiques respectives d'appui et de centrage, assurant une liaison très précise et rigide. Simultanément, la traction axiale de la queue dans le corps est équilibrée, assurant un centrage et un alignement rigoureux de l'outil le long de l'axe de rotation.

Selon un mode de réalisation avantageux :
- la portion distale du tirant est une tige munie d'un alésage axial taraudé, le tirant comprend une surface frontale d'appui, et la portion d'extrémité proximale est munie de moyens pour son entraînement en rotation, la tige étant conformée pour s'engager dans la portion cylindrique coaxiale de cavité axiale du corps,
- une portion proximale de cavité axiale du corps, ouverte sur la face axiale extrême du corps, prolonge la portion cylindrique coaxiale de cavité axiale,
- une surface annulaire d'appui est prévue dans la cavité axiale du corps et est conformée pour coopérer avec la surface frontale d'appui du tirant,
- une partie filetée de pièce de liaison est adaptée pour coopérer par vissage dans l'alésage taraudé du tirant.

Selon un mode de réalisation avantageux, les moyens permettant l'assemblage déconnectable de la pièce de liaison sur la queue comprennent des formes d'engagement complémentaires de type tenon à tête s'engageant dans une mortaise.

Dans ce cas, on prévoit de préférence le tenon à tête à l'extrémité proximale de la queue, tandis que la mortaise est prévue à l'extrémité distale de la pièce de liaison.

Une amélioration sensible des résultats d'usinage, et de l'alignement de l'outil le long de l'axe de rotation, est obtenue en prévoyant une bague de maintien radial montée à coulissement à faible jeu sur la partie distale de la pièce de liaison, pour assurer la tenue radiale des parois latérales de la mortaise.

D'autres objets, caractéristiques et avantages de la présente invention ressortiront de la description suivante de modes de réalisation particuliers, faite en relation avec les figures jointes, parmi lesquelles:
- la figure 1 illustre, en vue de côté en coupe longitudinale le long de l'axe de rotation, une structure d'outil de coupe rotatif à tête interchangeable selon un mode de réalisation de la présente invention, en position assemblée ;
- la figure 2 est une vue de côté en coupe longitudinale du corps de fixation d'outil dans le mode de réalisation de la figure 1 ;
- la figure 3 est une vue de côté de l'ensemble interchangeable composé d'une tête de coupe prolongée par une queue selon le mode de réalisation de la figure 1 ;
- la figure 4 est une vue de côté de la pièce de liaison selon le mode de réalisation de la figure 1 ;
- la figure 5 est une vue de côté en coupe longitudinale du tirant épaulé selon le mode de réalisation de la figure 1 ; et
- la figure 6 est une vue de côté en coupe longitudinale de la bague de maintien radiale du mode de réalisation de la figure 1.

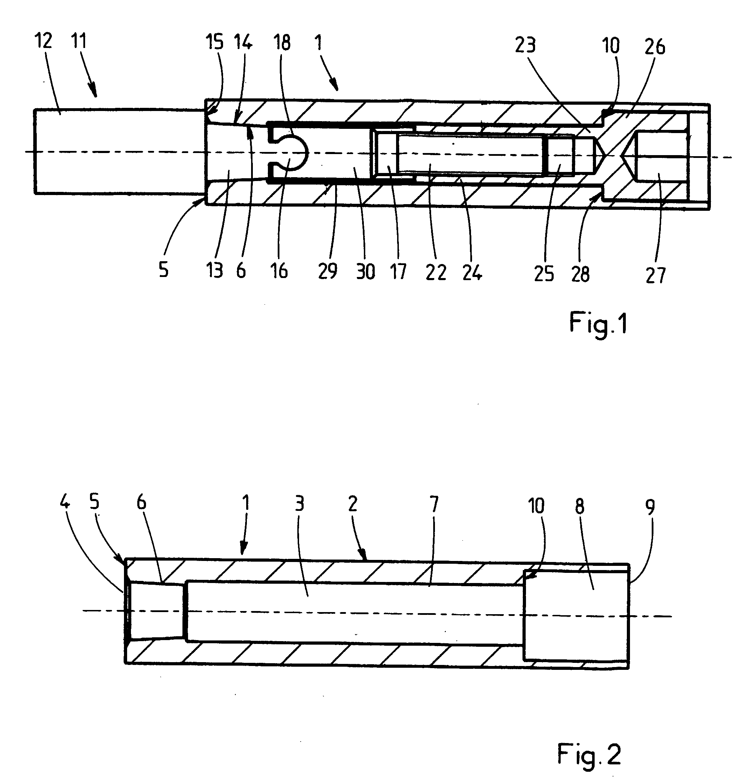

Dans le mode de réalisation illustré sur les figures, l'outil de coupe rotatif selon l'invention comprend un corps 1, illustré en détail sur la figure 2, conformé extérieurement pour être tenu dans un porte-outil rotatif. Par exemple, sa surface extérieure 2 est cylindrique, pour s'adapter dans une broche cylindrique. Le corps 1 comporte une cavité axiale 3, ouvrant sur un orifice distal 4, bordé d'une face annulaire radiale d'appui 5. La cavité axiale 3 comporte, à partir de l'orifice distal 4, une portion tronconique coaxiale 6 allant en se rétrécissant vers l'intérieur et suivie d'une portion cylindrique coaxiale 7. La portion cylindrique coaxiale 7 se prolonge par une portion proximale 8 de cavité axiale du corps, ouverte sur la face axiale extrême 9 du corps 1. Dans la réalisation illustrée sur les figures, la portion cylindrique coaxiale 7 de cavité axiale se raccorde à la portion proximale 8 de cavité axiale par une surface annulaire d'appui 10.

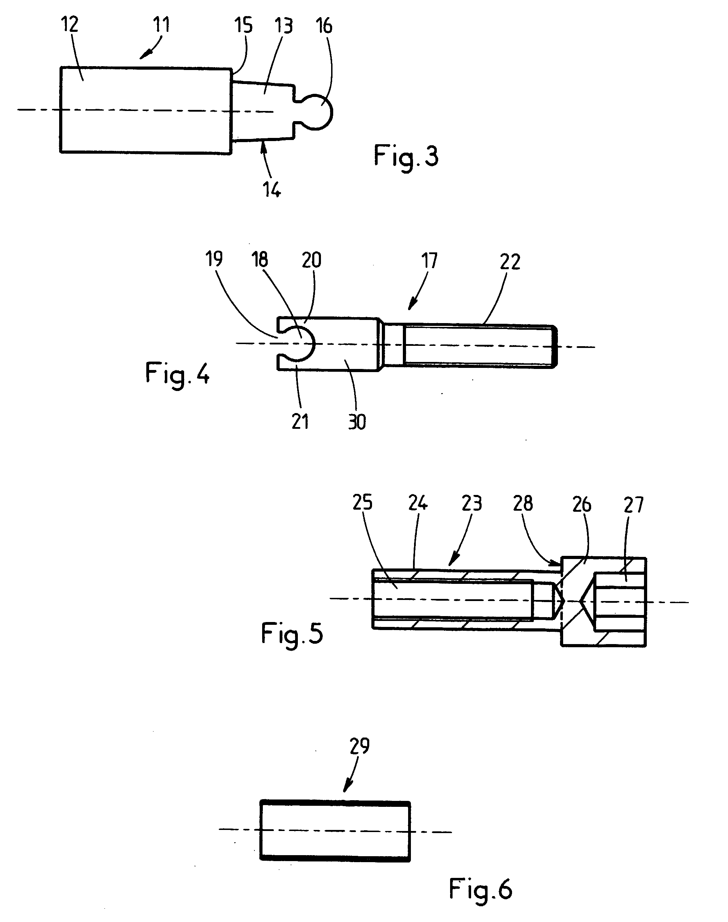

L'outil de coupe comprend en outre un ensemble interchangeable 11, illustré schématiquement sur la figure 3, composé d'une tête de coupe 12 prolongée par une queue 13 présentant une forme complémentaire de la face annulaire radiale 5 et de la portion tronconique coaxiale 6 du corps 1, avec un tronçon tronconique coaxial 14 au moins partiellement complémentaire de la portion tronconique coaxiale 6 du corps 1, et avec un décrochement annulaire radial 15 correspondant à la face annulaire radiale 5 du corps 1. Un tenon à tête 16 est prévu à l'extrémité proximale de la queue 13. La tête de coupe 12 est représentée seulement schématiquement sur le dessin, et elle peut avoir toute forme et toute structure adaptée pour l'usinage à réaliser. Il peut s'agir par exemple d'une tête de fraisage, d'une tête d'alésoir, d'une tête de perçage.

L'outil de coupe selon l'invention comprend en outre une pièce de liaison 17, mieux visible sur la figure 4. La pièce de liaison 17 comprend, pour son assemblage déconnectable sur la queue 13 de l'ensemble interchangeable 11, une forme d'engagement complémentaire de type mortaise 18, prévue à l'extrémité distale de la pièce de liaison 17, et conformée pour recevoir le tenon à tête 16. L'assemblage par tenon à tête 16 et mortaise 18 assure un blocage en rotation de l'ensemble interchangeable 11 par rapport à la pièce de liaison 17, et une solidarisation axiale permettant la traction de l'ensemble interchangeable 11 vers l'intérieur de la cavité axiale 3 du corps 1.

Dans le mode de réalisation illustré sur les figures, la mortaise 18 a la forme d'un cylindre transversal, ouvert sur la face distale de la pièce de liaison 17 selon une fente 19 plus mince que le diamètre du cylindre formant la mortaise 18. La mortaise 18 est ainsi limitée par deux parois latérales 20 et 21. Le tenon à tête 16 présente une forme complémentaire cylindrique transversale.

La pièce de liaison 17 comprend, pour son déplacement axial et sa fixation dans le corps 1, une partie filetée 22 proximale.

Selon l'invention, l'outil de coupe rotatif à tête interchangeable comprend en outre, pour assurer le déplacement axial, un tirant 23 mieux visible sur la figure 5, ayant une portion distale 24 en forme de tige munie d'un alésage axial taraudé 25, et ayant une portion d'extrémité proximale 26 en forme de tête munie de moyens 27 pour son entraînement en rotation. Dans le mode de réalisation représenté, les moyens 27 d'entraînement en rotation ont la forme d'un trou axial à six pans, adapté pour recevoir une clé de serrage correspondante. La tige 24 est conformée pour coulisser et tourner librement dans la portion cylindrique coaxiale 7 du corps 1, tandis que la tête 26 est conformée pour s'engager librement dans la portion proximale 8 de la cavité axiale 3 du corps 1.

La cavité axiale 3 du corps 1 comporte en outre une surface annulaire d'appui 10 contre laquelle peut venir porter une surface frontale d'appui 28 correspondante du tirant 23. Dans le mode de réalisation représenté sur les figures, cette surface annulaire d'appui 10 est constituée par une surface annulaire assurant la liaison entre la portion cylindrique coaxiale 7 et la portion proximale 8 de plus grand diamètre de la cavité axiale 3 du corps 1. La surface frontale d'appui 28 du tirant 23 est la base d'une portion proximale 26 élargie en forme de tête. En position assemblée, la surface frontale d'appui 28 du tirant 23 porte contre la surface annulaire d'appui 10 du corps 1, limitant la translation axiale du tirant 23 vers l'extrémité distale du corps 1.

La partie filetée 22 de la pièce de liaison 17 est adaptée pour coopérer par vissage dans l'alésage taraudé 25 du tirant 23.

Enfin, on peut avantageusement prévoir une bague de maintien radial 29, telle qu'illustrée sur la figure 6, constituée d'un tube cylindrique en acier, conformée pour être montée à coulissement à faible jeu sur la partie distale 30 de la pièce de liaison 17, afin d'assurer la tenue radiale des parois latérales 20 et 21 de la mortaise 18 en s'opposant à leur écartement.

Dans le mode de réalisation illustré sur les figures, la surface annulaire d'appui 10 est une surface radiale, correspondant à une base 28 radiale de la tête 26 de tirant.

En alternative, la surface annulaire d'appui 10 peut être tronconique à sommet distal, correspondant à une base 28 tronconique de tête 26 de tirant.

On pourra avantageusement prévoir des moyens de blocage en rotation du tirant 23 dans le corps 1. Par exemple, la surface annulaire d'appui 10 et la surface frontale 28 du tirant 23 peuvent comporter des aspérités s'opposant à la rotation du tirant 23 dans le corps 1 après serrage.

En position assemblée, telle qu'illustrée sur la figure 1, le tenon à tête 16 est engagé dans la mortaise 18, la bague 29 est engagée sur la partie distale 30 de la pièce de liaison 17. Par rotation du tirant 23 au moyen d'une clé engagée dans le trou 27, le tirant 23 assure la traction axiale de la pièce de liaison 17 dont la portion filetée 22 est engagée dans l'alésage taraudé 25 du tirant 23. La pièce de liaison 17 provoque ainsi la traction axiale de l'ensemble interchangeable 11, de sorte que la queue 13 est en appui axial à la fois contre la portion tronconique coaxiale 6 et contre la face annulaire radiale 5 du corps 1.

On constate qu'un tel dispositif assure en toute circonstance un maintien centré de l'outil le long de l'axe de rotation, et évite les inconvénients des dispositifs connus dans les applications d'usinage à grande vitesse.

La présente invention n'est pas limitée aux modes de réalisation qui ont été explicitement décrits, mais elle en inclut les diverses variantes et généralisations contenues dans le domaine des revendications ci-après.

## Revendications

1. Outil de coupe rotatif à tête interchangeable, comprenant :
- un corps (1) conformé extérieurement pour être tenu dans un porte-outil et comportant une cavité axiale (3) ouvrant sur un orifice distal (4) bordé d'une face annulaire radiale d'appui (5), la cavité axiale (3) comportant, à partir de l'orifice distal (4), une portion tronconique coaxiale (6) allant en se rétrécissant vers l'intérieur et suivie d'une portion cylindrique coaxiale (7),
- un ensemble interchangeable (11) composé d'une tête de coupe (12) prolongée par une queue (13), avec un tronçon tronconique coaxial (14) au moins partiellement complémentaire de la portion tronconique coaxiale (6) du corps (1), et avec un décrochement annulaire radial (15) correspondant à la face annulaire radiale (5) du corps (1),
- une pièce de liaison (17) comprenant des moyens (16, 18) permettant son assemblage déconnectable sur ladite queue (13) et des moyens de serrage axial (22, 23) pour fixer la pièce de liaison (17) dans la portion cylindrique coaxiale (7) de cavité axiale (3) du corps (1) avec déplacement axial pour assurer un appui axial de la queue (13) à la fois contre la portion tronconique coaxiale (6) et contre la face annulaire radiale (5) du corps (1),
caractérisé en ce que :
les moyens de serrage axial comprennent un tirant (23) engagé à rotation dans la cavité axiale (3) du corps (1) et bloqué en translation axiale vers l'extrémité distale du corps (1), avec une portion proximale (26) accessible pour son entraînement en rotation, et avec une portion distale (24) coopérant par vissage avec la pièce de liaison, pour solliciter en translation axiale la pièce de liaison (17) et l'ensemble interchangeable (11) lors d'une rotation axiale du tirant (23).

2. Outil de coupe rotatif à tête interchangeable selon la revendication 1, caractérisé en ce que :
- la portion distale (24) du tirant (23) est une tige munie d'un alésage axial taraudé (25), le tirant (23) comprend une surface frontale d'appui (28), et la portion d'extrémité proximale (26) est munie de moyens pour son entraînement en rotation (27), la tige (24) étant conformée pour s'engager dans la portion cylindrique coaxiale (7) de cavité axiale (3) du corps (1),
- une portion proximale (8) de cavité axiale (3) du corps (1), ouverte sur la face axiale extrême (9) du corps (1), prolonge la portion cylindrique coaxiale (7) de cavité axiale (3),
- une surface annulaire d'appui (10) est prévue dans la cavité axiale (3) du corps (1) et est conformée pour coopérer avec la surface frontale d'appui (28) du tirant (23),
- une partie filetée (22) de pièce de liaison (17) est adaptée pour coopérer par vissage dans l'alésage taraudé (25) du tirant (23).

3. Outil de coupe rotatif à tête interchangeable selon l'une des revendications 1 ou 2, caractérisé en ce que les moyens permettant l'assemblage déconnectable de la pièce de liaison (17) sur la queue (13) comprennent des formes d'engagement complémentaires de type tenon à tête (16) s'engageant dans une mortaise (18).

4. Outil de coupe rotatif à tête interchangeable selon la revendication 3, caractérisé en ce que le tenon à tête (16) est prévu à l'extrémité proximale de la queue (13), tandis que la mortaise (18) est prévue à l'extrémité distale de la pièce de liaison (17).

5. Outil de coupe rotatif à tête interchangeable selon la revendication 4, caractérisé en ce qu'une bague de maintien radial (29) est montée à coulissement à faible jeu sur la partie distale (30) de la pièce de liaison (17), pour assurer la tenue radiale des parois latérales (20, 21) de la mortaise (18).

6. Outil de coupe rotatif à tête interchangeable selon la revendication 2, caractérisé en ce que la surface annulaire d'appui (10) est une surface radiale assurant la liaison entre la partie cylindrique coaxiale (7) de cavité axiale (3) du corps (1) et la portion proximale (8) de plus grand diamètre de cavité axiale (3) du corps (1), la surface frontale d'appui (28) du tirant (23) étant la base radiale d'une portion proximale (26) élargie en forme de tête.

7. Outil de coupe rotatif à tête interchangeable selon la revendication 2, caractérisé en ce que la surface annulaire d'appui (10) est une surface tronconique à sommet distal, assurant la liaison entre la partie cylindrique coaxiale (7) et la partie proximale (8) de plus grand diamètre de cavité axiale (3) du corps (1), la surface frontale d'appui (28) du tirant (23) étant la base tronconique d'une portion proximale (26) élargie en forme de tête.

8. Outil de coupe rotatif à tête interchangeable selon l'une des revendications 2, 6 ou 7, caractérisé en ce qu'il comprend en outre des moyens de blocage en rotation du tirant (23) dans le corps (1).

9. Outil de coupe rotatif à tête interchangeable selon la revendication 8, caractérisé en ce que la surface annulaire d'appui (10) et la surface frontale d'appui (28) de tête (26) de tirant comportent des aspérités s'opposant à la rotation du tirant (23) dans le corps (1) après serrage.
